(19) Europäisches Patentamt / European Patent Office / Office européen des brevets

(11) **EP 2 782 058 A1**

(12) **EUROPEAN PATENT APPLICATION**

(43) Date of publication:
24.09.2014 Bulletin 2014/39

(51) Int Cl.:
*G06Q 30/02* (2012.01)    *G06Q 10/00* (2012.01)

(21) Application number: 13160234.4

(22) Date of filing: 20.03.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: **Valuetainment AG**
8274 Tägerwilen (CH)

(72) Inventor: **Hamm, Dirk**
8274 Tägerwilen (CH)

(74) Representative: **Patentanwälte Freischem**
**Salierring 47-53**
**50677 Köln (DE)**

Remarks:
A request for correction of the description and drawings has been filed pursuant to Rule 139 EPC. A decision on the request will be taken during the proceedings before the Examining Division (Guidelines for Examination in the EPO, A-V, 3.).

(54) **Information system to obtain an exposition rating of a geographical area**

(57)    The present invention relates to an information system to obtain an exposition rating of a certain geographical area, a computer-implemented method to obtain the exposition rating of a certain geographical area, and an electronic device for the display of information based on the exposition rating.

Fig. 1

EP 2 782 058 A1

**Description**

The present invention relates to an information system to obtain an exposition rating of a certain geographical area, a computer-implemented method to obtain the exposition rating of a certain geographical area.

Rating and evaluating geographical regions or neighborhoods has always been a difficult task. As an example, the estimated rental value for retail stores in shopping areas is typically evaluated by manually counting the visitors passing by a certain building or street. Some solutions already suggest cameras and automatic image processing and recognition of the visitors. However, all these solutions require a substantial investment in time and money to obtain reliable information about the popularity of certain geographical areas - small like the location of a particular store or big like regions around cities.

The problem underlying the present invention is therefore to provide an automated technology to determine the popularity of geographical areas.

In a first embodiment, the problem underlying the invention is solved by an information system to obtain an exposition rating of a certain geographical area comprising:

    a. Map display means on at least one client device,

    b. Signal triggering means on a server capturing requested map information triggering a segment-frequency signal each time a particular segment of a map with a certain segment-identifier is displayed on the at least one client device, where the map information comprises segments forming a map or an image of a map made up of segments,

    c. Measuring means on server to record the segment-frequency signal for processing,

    d. Signal processing means on the server for processing the received segment-frequency signals to generate location data defined at least by the segment-identifier and the total number of impressions of the segment corresponding to the segment-identifier on the respective client device;

    e. Storage means on the server for storing this location data on a server;

    f. Rating means on the server for creating an exposition rating for a particular geographical area corresponding to at least one segment-identifier determined from the signals taking into account at least the location data defined by the segment-identifier and the total number of impressions of the segment corresponding to the segment-identifier.

The present invention addresses the above problems by providing methods and systems for facilitating and simplifying the rating of geographical areas based on their popularity.

The technical problem of the prior art was the difficulty to find an automated technical solution to counting visitors of a certain geographical area and the enormous amount of technical infrastructure needed to automatically monitor e.g. certain streets with cameras and to process the obtained images to track and count visitors passing by stores on the street. This technical problem is solved by technical means that are capturing the interaction of humans with computers, creating measuring signals to be recorded and processed on a server to obtain comparable results to results obtained by the solutions of the prior art. Thus, the invention has the further technical effects of solving the technical problem of the prior art, using and improving the interaction between humans and computers, as well as measuring a signal and processing it. Thus, technical considerations led the inventors to a technical solution.

A clear advantage of the invention is the inexpensive deployment of the technology to a vast amount of client devices to obtain comparable results compared to the technology of the prior art. Geographical areas can easily be rated and compared based on their popularity without the need of expensive cameras only by creating a measureable signal on client devices and processing these signals on a server.

The present invention also allows rating of geographical areas in real time, whereas the solutions of the prior art so far were only capable of delivering a rating for a certain geographical area in longer time intervals.

All described advantages over the prior art are all the more achieved by the preferred embodiments described below.

Techniques and technologies may be described herein in terms of functional and/or logical block components and with reference to symbolic representations of operations, processing tasks and functions that may be performed by various computing components or devices. It should be appreciated that the various block components shown in the figures may be realized by any configuration of hardware, software, and/or firmware components configured to perform the specified functions. For example, an embodiment of a system or a component may employ various integrated circuit components, e.g. memory elements, digital signal processing elements, logic elements, look-up tables, or the like, which may carry out a variety of functions under the control of one or more microprocessors or other control devices.

The following terms used herein are defined as follows:

Exposition rating: a value representing the popularity of a geographical area used to compare different geographical areas.

Geographical area: Illustratively defined in terms of a zip code, group of zip codes, cell identification (Cell-ID) information, caller ID (Call-ID) information, the boundaries of a state, county, city, town, place, or other governmental or municipal subdivision, locations within a fixed range of latitude and longitude and in the case of three-dimensional maps also height, or locations within a specified two-dimensional or three-dimensional geometric boundary. The geographical area may, but need not, be set automatically based upon the present location of a handset or a user requesting the display of a certain geographical area on his client device. The geographical area may, but need not, be designated by a user based upon manual, verbal, or user-specified input. The geographical area may, but need not, be represented by a segment or a group of segments. The geographical area can be a coarse geographical area of interest such as state within a country or a refined geographical area of interest such as a particular neighborhood, with the latter being a portion of the former. The geographical area may be the same or different from the actual geographical location of the user. The location of the user may be changing and the user may use a mobile device. The term '"geographical area" may refer to a geographical area in the real world or a virtual world (e.g. in computer games).

GPS: Global Positioning System enables geographic two-dimensional or three-dimensional position determination at a land-based portable device equipped to receive signals from three or more orbiting GPS satellites.

Glonass: Glonass enables geographic two-dimensional or three-dimensional position determination at a land-based portable device equipped to receive signals from three or more orbiting Glonass satellites.

Server: a computer comprises a CPU, a memory, a storage device, communication means and the like. The server is run by an operating system. Computer programs are installed and may be run to facilitate the execution of the invention. The word server in the sense of the present invention may also encompass a plurality of servers, such as a map-content server and a statistics server.

Client device: a computer used by each user comprising a CPU, a memory, a storage device, a display, communication means and the like. The display of the client device is capable of displaying a map. The client device is run by an operating system. Computer programs are installed and may be run to facilitate the execution of the invention. A client device may, but need not, be a handheld computer, a desktop computer, a laptop computer, a telephone, a smartphone, a mobile phone, a portable computer game, or an intelligent head mounted display.

Map: a map always refers to an electronic geographical map. As an example, the map may be a Cartesian, a Mercator or a gnomonic map. As an example, the map may be a political map, a physical map, a topographic map, a geological map, a satellite image map, three-dimensional map (like products such as Google Earth), or a street map. A three-dimensional map may comprise coordinates in all three dimensions. The map may be a map of the real world or a virtual world (e.g. in computer games).

Segment: a certain part of the map. The only necessary condition is that all segments will add up to form the map. The segment may have any geometrical shape. As an example, this may be a rectangular image of a part of the map. The segments may or may not have all the same size. The segments may be three-dimensional to form a three-dimensional map or two-dimensional to form a two-dimensional map. As an example the segments of a three-dimensional map may of cuboid shape. As another example, the segments of a two-dimensional map may be tiles.

Segment-frequency signal: this signal may be measured on a client device or the server and represents the number of impressions of a segment on the display of the client device. This signal may or may not be an analog or digital signal.

User: a human, another sentient being or an artificial intelligence interacting with the client device.

IP address: this is a unique address, identifying any given computer like the client device on a network such as the internet. This includes but is not limited to addresses defined by the internet protocols IPv4 or IPv6.

Timestamp: a number representing a certain time. As an example, a timestamp could be an integer number counting the seconds starting from 1. January 1970 00:00 am UTC.

Database Table: a database table in the sense of the invention may be a database table in a relational database, but may also very well be other related storage means such as database horizontal partitioning (shard) or database clustering.

The request by the user for a particular map may be generated

- based on the user's input of a particular address or other identifier of a particular location or region, or

- by eyetracking the user's eye for moving the map inside the display of the client device based on the eye-movement of the user, or

- by monitoring other input devices of the client such as a mouse to determine e.g. the user dragging the map into a certain direction or the user selecting a certain position on the map e.g. by clicking.

The actual segments or the image of the map made up of segments may be served from the server or a third party map-server, such as the Google-Maps-Server, OpenStreetMap or the map service by Nokia.

The map may be displayed as viewed from above the selected location (e.g. map overview) or three-dimensionally as viewed from the perspective of a person at the selected location (e.g. location view).

Advantageously, the information system may also comprise an information display means on the at least one for displaying additional information to a user depending on the exposition rating corresponding to the geographical region or at least one segment-identifier of the segments currently displayed to the user.

Also, additional actions on the client device may be triggered depending on the exposition rating, such as changing the behavior of the input device such as the mouse.

The additional information may be sent to the client device from the server or from any other third party computer. The additional information may take the form of an overlay over the map, the color and/or transparency of the overlay depending on the exposition rating of the segment or geographical area displayed under the overlay. The additional information may also take the form of one or more virtual tables, of one or more boxes or any other geometrical shapes like hexagons for the display of text or other visual content (e.g. images or video), where the displayed content in the box depends on the exposition rating. The additional information may have an opacity larger than 0 (nearly transparent) to 1 (completely opaque), and preferably an opacity from 0.5 to 0.9. The content may e.g. be a certain base value for the rent for each square meter of a retail store multiplied by the exposition rating. The content of the boxes may also take the form of images served from a third party computer, where the images served depend on the exposition rating. As an example, an image with one coin may be served for displayed geographical areas with a low exposition rating and an image with three coins may be served for displayed geographical areas with a high exposition factor.

The additional information may also be an audio signal, such as a bell. This audio signal may be altered depending on the exposition rating. Alternatively, and audio signal may be generated in addition to visual additional information as described above.

Advantageously, the signal triggering means may also comprise means for detection, whether only a part of a segment corresponding to a particular segment identifier was shown. Preferably, the percentage of the segment that was shown is captured e.g. on the server as the segment-percentage and as an example then processed by server as part of or together with the segment-frequency signal. The means for detection may comprise a relevance module taking into account the relevance of a segment in relation to the area shown by the map display means.

Thus, it is preferable that the signal processing means takes into account the segment-percentage when generating the location data.

Preferably, the rating means take into account the segment-percentage when creating the exposition rating.

Advantageously, the signal triggering means may also save or process the IP address of the client device.

Preferably, the IP address is captured and transmitted to the server as part of or together with the segment-frequency signal.

Thus, it is preferable that the signal processing means take into account the IP address when generating the location data. In a preferred embodiment, the number of processed signals per IP address and therefore ultimately requests of maps per IP address is limited in such a way that a maximum number count_max of signals is defined and if the number of signals to be processed from a particular IP address exceeds this limit within a certain timeframe delta_time, only the last count_max signals are processed.

In addition or independent of this, a number count_min may be defined and, if the number of signals to be processed within the timeframe delta_time is lower than count_min, all signals of the past are counted, but at most as many as count_min.. If the number of signals to be processed is between count_min and count_max, preferably the actual number of signals within delta_time may be processed.

Preferably, the rating means take into account the IP address when creating the exposition rating.

Preferably, the rating means take into account the date or time and in particular the yearly season when creating the exposition rating with a season factor. This would have the advantage that e.g. the projected rent for an ice cream parlor could be calculated differently depending on the season. One might assume that the rent for an ice cream parlor in the summer could be set to higher levels than in the winter.

Advantageously, the signal triggering means may also detect and process the time of the request and thus the generated signal on the server and generate a timestamp.

Preferably, the timestamp is captured and transmitted to the server as part of or together with the segment-frequency signal.

Thus, it is preferable that the signal processing means take into account the timestamp when generating the location data.

Preferably, the rating means take into account the timestamp when creating the exposition rating.

Advantageously, the signal triggering means may also detect the geographic location of the client device. The geographic location of the client device may be detected by using various methods, including GPS, GSM cell identification (Cell-ID) information, WiFi-information, geolocation of the IP address or Glonass.

The client device may also track the eye movement or facial expressions and transmit this information to the client. The client may then include this information with the location data or process this data in parallel with the location data. This information may also be stored using the storage means on the server and it may be stored in the same database record as the location data.

The client device may also comprise means for capturing the viewing behavior, in particular the viewing direction, the viewing angle of inclination, the viewing depth and/or the viewing width of the user. The viewing behavior may be captured in the real world, in a virtual world or as the viewing behavior of the user interacting with the display means. The viewing behavior may be captured using glasses or eye-tracking means.

The viewing behavior may be transmitted to the server. The client may then include this information about the viewing behavior with the location data or process this data in parallel with the location data. This information about the viewing behavior may also be stored using the storage means on the server and it may be stored in the same database record as the location data. The rating means may preferably take into account the viewing behavior of the user of the client device to calculate the rating for a particular object (e.g. a house) that was viewed by the user. This feature has the advantage that a service provider can get information about what the users of the client devices actually looked at and not only where they where (in real life or virtually). As an example, a visitor of Alexanderplatz, Berlin, Germany, has installed an application on his mobile phone implementing the system according to the present invention. He is looking around and he is looking exactly 10 seconds at the "Funkturm" (i.e. tower with telecommunication means). This can be captured and used by the rating means to calculate a rating particularly for "Funkturm". This has not been possible with previously known technologies.

The viewing direction may preferably be obtained by a compass function of the client device and/or the direction of the map on the display means of the client device.

The viewing angle of inclination may preferably be obtained by using data from an altimeter, GPS, GSM or WiFi data or by evaluating the interaction of the user with the display means.

The viewing depth and viewing width may preferably obtained by taking into account the current position of the user, the viewing direction of the user and any known objects (e.g. houses marked in the map) limiting the view of the user.

Preferably, the display means may display icons or avatars on the map representing other users present at their respective location. These users may be present in reality (e.g. with their mobile client devices at the respective location) or virtually (e.g. visiting the location using their computer at home). The icon or avatar may be different based on user preference or the status (e.g. real visitor vs. virtual visitor).

The client device may also comprise means for capturing the additional user specific data, in particular the direction of movement, the time that a user is steady at a certain location, the duration of the view of the user in a certain direction, the weather, the age, the sex and/or interests/hobbys of the user.

The additional user specific data may be transmitted to the server. The client may then include this additional user specific data with the location data or process this data in parallel with the location data. This additional user specific data may also be stored using the storage means on the server and it may be stored in the same database record as the location data. The rating means may preferably take into account additional user specific data of the user of the client device to calculate the rating for a particular object (e.g. a house) that was viewed by the user.

Preferably, the geographic location of the client device is captured and transmitted to the server as part of or together with the segment-frequency signal.

Thus, it is preferable that the signal processing means take into account the geographic location of the client device when generating the location data.

Preferably, the rating means take into account the geographic location of the client device when creating the exposition rating.

Advantageously, the rating means will store the calculated exposition rating in the storage means for each segment-identifier and/or geographic area.

Preferably, no signals are generated if the zoom level of the map display means is displaying more than segments_max segments, where segments_max is an integer number. This way, no signals may be generated, if the user is zooming out the map to far, e.g. displaying the whole world. Alternatively and likewise preferred, the signal processing means is not processing the signals, if the client device is displaying more than segments_max segments, where segments_max is an integer number.

Preferably, the segments, images of the segments or any other map related data may reside on and are served from a map-content server.

Preferably, the signal processing means, the storage means and the rating means may reside on a statistics server.

The map-content server and the statistics server may preferably be different servers.

Advantageously, a geographical region may be defined as a group of segments with certain segment-identifiers. Preferably, the rating means may calculate an average exposition rating for each geographical region as an average of the exposition rating for all relevant segments within the geographical region.

The map display means may advantageously be an electronic display such as an organic LED-display on the client device.

The signal triggering means may advantageously be implemented as a software routine, detecting the display of a certain segment with a corresponding segment-identifier on the map display means. As an example, this could be the software routine receiving the segments from the server.

The measuring means may advantageously be implemented as a software routine, counting the impressions for each displayed segment on the display means and transmitting it to the server. The transmission may be achieved e.g. by a RESTful webservice using in Internet Protocol such as the HTTP or the HTTPS protocol on the internet.

The measuring means in combination with the other components of the invention may be seen as a system for automatically recognizing and capturing a human interaction with the client and enabling the system to interpret this interaction to solve the technical problem underlying the invention.

The signal processing means may advantageously be implemented as a software routine, receiving the signal from the measuring means e.g. via the RESTful webservice using the HTTP/HTTPS protocol on the internet and creating or updating variables to be filled with all transmitted information. As an example, a variable for the IP address of the client device, a variable of the total count of a certain segment displayed on the client device, the segment-identifiers of the displayed segments, the duration of the display time for each segment and any other information gathered from the client device may be updated or created.

The storage means may advantageously be a relational database residing on the server. Advantageously, a database table for the individual signals that are received is created. All aforementioned variables mentioned in the previous paragraph may be stored in different columns of this database table. Preferable, another database table is present to store the data associated with each single segment identified by its segment-identifier. As an example, the total count of impressions, the average display duration or the average segment-percentage for each segment over all client devices is recorded in this database table.

The rating means may advantageously be implemented as a software routine. As an example, it may calculate the exposition rating by multiplying a normalized average display duration with the normalized total count of impressions for each segment-identifier with the season factor with the average segment-percentage over all client devices and all recorded signals. Normalization may be achieved by identifying the largest single value taken into account for each of these factors and then multiplying the average of all values with the reciprocal value of the largest single value.

The information display means may advantageously be implemented as the map display means. As an example, the screen for displaying the map on the client may also display the additional information at the same time. This may be achieved as discussed above. Alternatively, the information display means may be implemented as a separate display, such as a separate organic LED display.

In another embodiment of the invention, the problem according to the present invention is solved by a computer-implemented method to obtain an exposition rating of a certain geographical area including the steps of

    a. transferring and displaying of images of segments with a certain segment-identifier of a topographic map corresponding to a geographical area from a server or a map-server to at least one client device based on a request by the respective client device to the server requesting the display of a map corresponding to this geographical area,

    b. capturing the interaction between the user and the at least one client device for each display of a segment on the at least client device to create a segment-frequency signal corresponding to the number of impressions of the segment,

    c. generating location data comprising that segment-frequency signal and the corresponding segment-identifier on the server,

    d. storing the location data defining the total impressions of the segment on at least one of the client devices,

    e. calculating an exposition rating for a particular geographical area corresponding to at least one segment-identifier determined from the segment-frequency signals taking into account the location data.

Advantageously, the method also includes a step of displaying additional information on the client device based on the exposition rating.

The method according to the present invention is therefore basically a method for analyzing information (the signal), generating new information (the exposition rating) and transferring and providing information based on this new information to the client device.

To avoid lengthy repetitions of the preferred embodiments, all preferred embodiments mentioned in relation to the information system also apply to this embodiment of the invention.

All described preferred embodiments have the same goal of improving the efficiency of the invention and to improve the reliability of the overall invention.

Preferred embodiments have been described above, but the present invention is not limited to these embodiments and it is possible to make various modifications and changes within the scope of the invention.

An illustrative embodiment consistent with the principles of the present invention will be described below relative to the following drawings.

Fig. 1 is a generalized information flow diagram showing a set of fundamental operations for the present invention.

Fig. 2 is a diagram showing the distributed system with its various technical means.

Fig. 3 is a diagram showing the general principle, how the map is divided into segments.

Fig. 4 is a diagram to explain the concept of the segment-percentage.

Fig. 5 is a diagram to explain the display of additional information based on the exposition rating.

Although selected embodiments of the present invention are shown and described below in the illustrative, it is to be understood the present invention is not limited to the described embodiments. Instead, it is to be appreciated that changes may be made to these embodiments without departing from the principles and spirit of the invention, the scope of which is defined by the claims and the equivalents thereof.

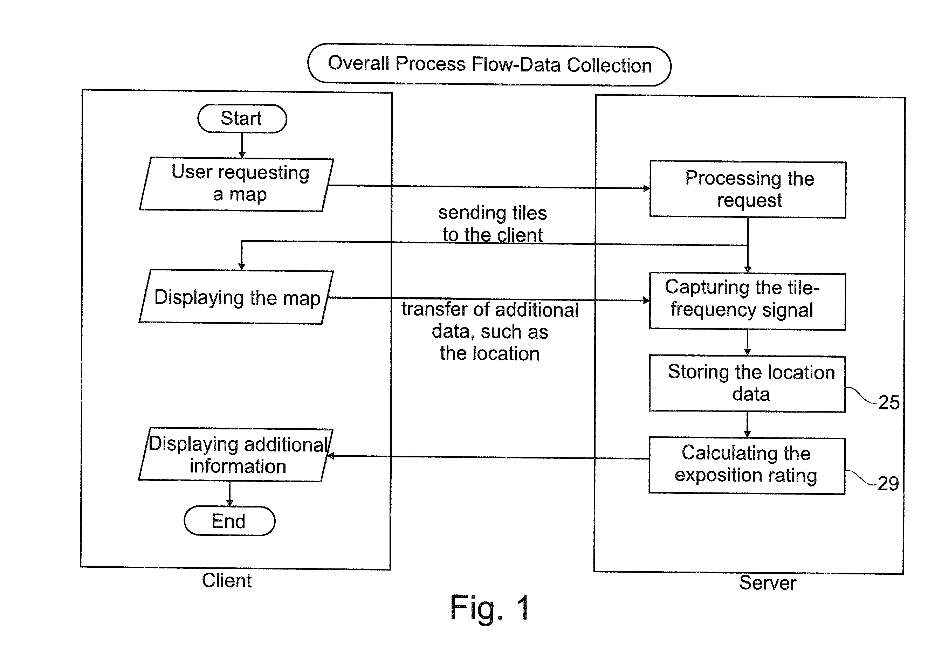

Fig. 1 is a generalized information flow diagram showing a set of fundamental operations for the information system 1. A user using a client device 3 wants to display part of a map 5 around a chosen location, such as "Hohe Strasse in Cologne, Germany", on a map display means 7 of his client device 3. The client device 3 therefore sends a corresponding request to the server 9, together with information about the zoom level of the map and the width and the height of total map to be shown.

The server 9 then processes this request and decides, which segments 11 (in this case tiles of a two-dimensional map) with their respective segment-identifiers 13 would correspond to the requested map 5. It then sends segments 11 to the client device 3, which in turn displays the map 5 consisting of the segments 11 on the display means 7.

A signal triggering means 15 on the server 3 will then detect, which segment 11 with its respective segment identifier 13 is displayed and will trigger a segment-frequency signal 17 for each displayed segment 11.

This segment-frequency signal 17 is then captured and recorded by a measuring means 19 on the server, which is then gathering all necessary information about this segment-frequency signal 17, such as the IP address of the client device, the geographic location of the client device, the duration of the display, segment identifier 13 and segment-percentage 21 for each segment 11 as well as the timestamp to form the overall segment-frequency signal 17 to be processed by the server 9. The measuring means 19 is then capturing the segment-frequency signal 17 and a signal processing means 23 on the server 9 are then processing the segment-frequency signal.

The signal processing means 23 is receiving the segment-frequency signal 17 and generates location data 25 defined by all information transmitted with the segment-frequency signal 17 as laid out above, such as the segment-identifier 13 and the total number of impressions of the segment 11 corresponding to the segment-identifier 13 on the respective client device 3.

This location data 25 is then sent to the storage means such as a relational database and stored.

The whole process described until this latest step is a continuous process, running all the time to gather the data needed to calculate an exposition rating 29 using arating means 37.

The following step of calculating the exposition rating 29 may also be done continuously or may be scheduled to be done in certain intervals of time, such as once every day.

The exposition rating 29 may be calculated for each segment 11 with a particular segment identifier 13. The exposition rating 29 may also be calculated for a geographic region 31 composed of a multitude of segments 11 as explained in the description above. This example explains the first case of the exposition rating 29 being calculated for a particular segment 11.

The factors to be taken into account, when calculating the exposition rating e.g. for rating a place for estimating the rent for an ice cream parlor near the address "Hohe Strasse in Cologne, Germany", could be calculated as follows:

The normalized total count count_total_segment_norm for a certain segment 11 would be calculated by dividing the total count of impressions across all client devices for a certain segment count_total_segment by the absolute maximum value for any total count of impressions across all client devices for any segment count_total_max.

$$count\_total\_segment\_norm = count\_total\_segment / count\_total\_max$$

The normalized total viewing duration duration_total_segment_norm for a certain segment 11 would be calculated by dividing the total viewing duration of impressions across all client devices for a certain segment duration_total_segment by the absolute maximum value for any total viewing duration of impressions across all client devices for any segment duration_total_max.

$$duration\_total\_segment\_norm = duration\_total\_segment / duration\_total\_max$$

The average segment-percentage percentage_average_segment for a certain segment 11 would be calculated by building the average of all values for the segment-percentage of impressions across all client devices for a certain segment 11.

The season factor season_factor for finding the rent for an ice cream parlor could be 1 in the summer and 0 in the winter and 0.5 in spring and fall.

The exposition rating 29 for a particular segment 11 could then be calculated as follows:

$$exposition\_rating\_segment = count\_total\_segment\_norm * duration\_total\_segment\_norm * percentage\_average\_segment * season\_factor$$

Then, the server could decide to send additional information to be displayed to the client. This additional information could be a star-rating from 1 star to five stars, five stars being the best rating. So for each segment 11 displayed on the client device 3, the exposition_rating_segment would be looked at and the additional content in the form of a star rating would be decided as follows:

$$1 \text{ star} = exposition\_rating\_segment < 0.2$$

$$2 \text{ stars} = 0.2 \leq exposition\_rating\_segment < 0.4$$

$$3 \text{ stars} = 0.4 \leq exposition\_rating\_segment < 0.6$$

$$4 \text{ stars} = 0.6 \leq exposition\_rating\_segment < 0.8$$

$$5 \text{ stars} = 0.8 \leq exposition\_rating\_segment$$

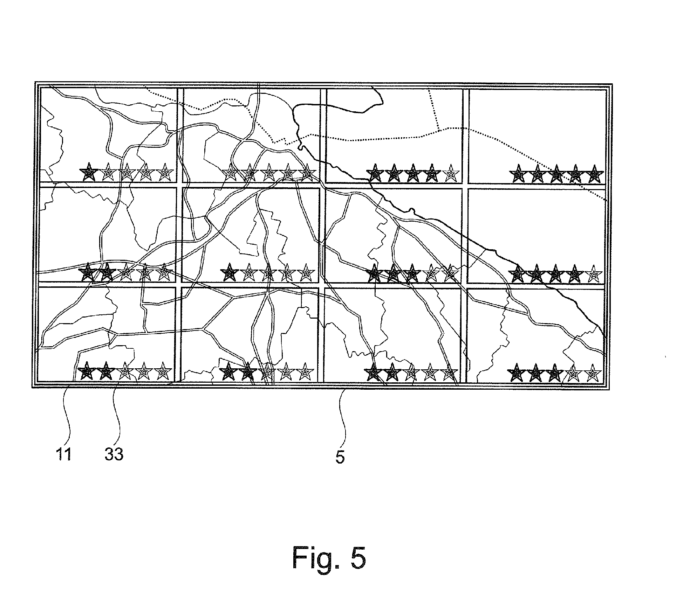

Depending this decision process, the server 9 would send the corresponding image file of the star rating 33 to the client 3 to be displayed as an overlay above the corresponding segment 11 using the information display means 35 (see also Fig. 5).

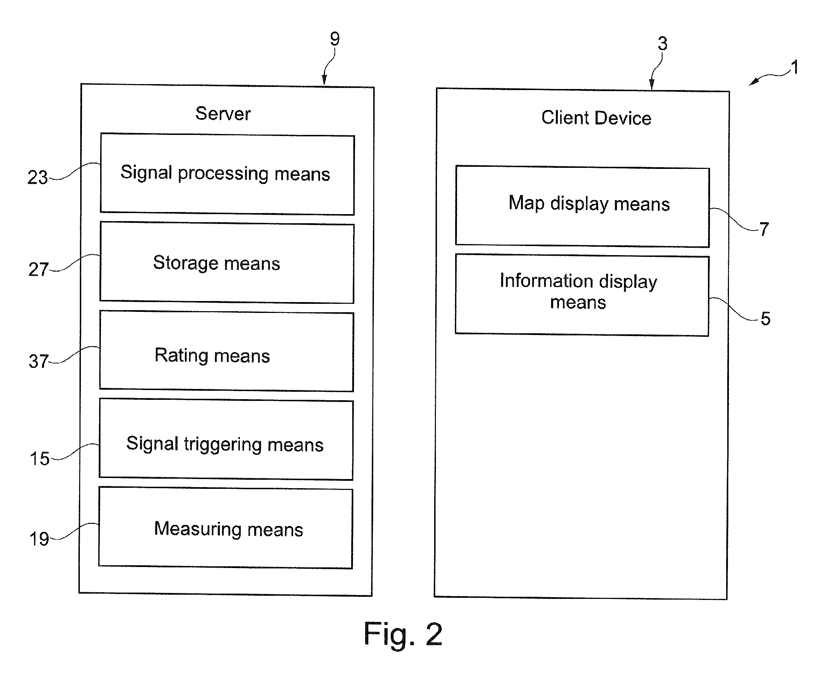

Fig. 2 shows the configuration of the information system 1. The signal processing means 23, the storage means 27, the signal triggering means 15, the measuring means 19 and the rating means 37 reside on the server 9. The map display means 7, and the information display means 5 reside on the client device 3.

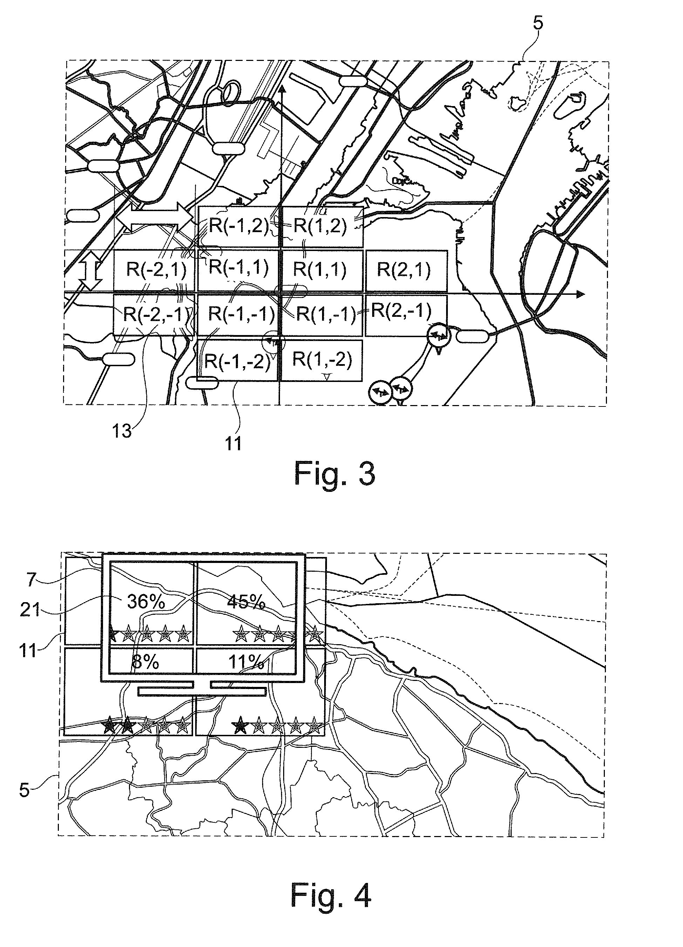

Fig. 3 shows the map 5 displayed using the map display means 7 on the client device 3. Fig. 3 illustrates, how the shown map 5 is composed of a multitude of segments 11 with their unique segment identifiers 13.

Fig. 4 shows illustrates the concept of the segment-percentage 21. A certain segment 11 of the map 5 may not be displayed to its full extend on the map display means 7.

Fig. 5 illustrates the display of additional information 33 as an overlay above a certain corresponding segment 11 of the map 5.

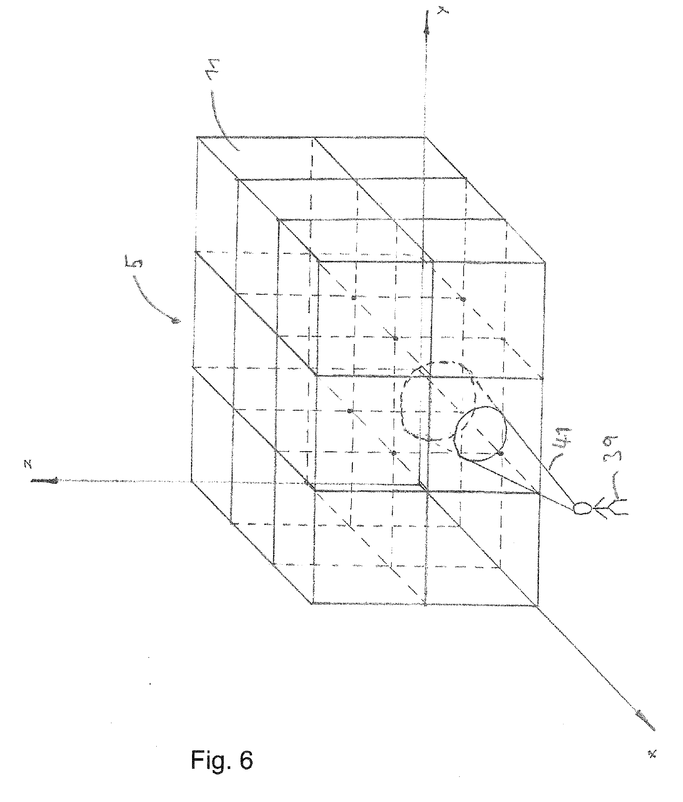

Fig. 6 illustrates the situation in a three-dimensional environment with a three-dimensional map 5. A user 39 exhibits a certain viewing behavior 41.

This viewing behavior 41 can be captured using eye-tracking in combination with a compass device and an altimeter. The user 39 looks into the direction of a certain segment 11.

The features disclosed in the present description, the drawings, and the claims may, but need not, be essential alone or in any combination for the invention and any embodiment thereof.

In view of the foregoing, it is expressly intended that all combinations of those elements and/or method steps which perform substantially the same function in substantially the same way to achieve the same results are within the scope of the invention. It should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

**List of reference signs**

| | |
|---|---|
| 1 | Information System |
| 3 | Client Device |
| 5 | Map |
| 7 | Map Display Means |
| 9 | Server |
| 11 | Segment |
| 13 | Segment Identifier |
| 15 | Signal Triggering Means |
| 17 | Segment-frequency Signal (or Signal) |
| 19 | Measuring Means |
| 21 | Segment-percentage |
| 23 | Signal Processing Means |
| 25 | Location Data |
| 27 | Storage Means |
| 29 | Exposition Rating |
| 31 | Geographic Region |
| 33 | Additional Information (e.g. Image File of the Star Rating) |
| 35 | Information Display Means |
| 37 | Rating Means |
| 39 | User |
| 41 | Viewing Behavior |

**Claims**

1. An information system (1) to obtain an exposition rating (29) of a certain geographical area comprising:

    a. Map display means on at least one client device,

    b. Signal triggering means on a server capturing requested map information triggering a segment-frequency signal each time a particular segment of a map with a certain segment-identifier is displayed on the at least one client device, where the map information comprises segments forming a map or an image of a map made up of segments,

    c. Measuring means on the server to record the segment-frequency signal for processing,

    d. Signal processing means on the server for processing the received segment-frequency signals to generate location data defined at least by the segment-identifier and the total number of impressions of the segment corresponding to the segment-identifier on the respective client device;

    e. Storage means on the server for storing this location data on a server;

    f. Rating means on the server for creating an exposition rating for a particular geographical area corresponding to at least one segment-identifier determined from the signals taking into account at least the location data defined by the segment-identifier and the total number of impressions of the segment corresponding to the segment-identifier.

2. Information system (1) according to claim 1, **characterized in that** the signal triggering means (15) comprises means for detection, whether only a part of a segment (11) corresponding to a particular segment identifier (13) was shown.

3. Information system (1) according to claim 1 or 2, **characterized in that** the information system (1) may also comprise an information display means (35) on the at least one (3) for displaying additional information (33) to a user depending on the exposition rating (29) corresponding to the geographical region or at least one segment-identifier (13) of the segments (13) currently displayed to the user.

4. Information system (1) according to any of claims 1 to 3, **characterized in that** the signal triggering means (15) may also detect and process the IP address of the client device (3).

5. Information system (1) according to any of claims 1 to 4, **characterized in that** the signal triggering means (15) may also detect and process the time of the request and thus the generated signal on the server (3) and generate a timestamp.

6. Information system (1) according to any of claims 1 to 5, **characterized in that** the signal triggering means (15) may also detect the geographic location of the client device (3).

7. Information system (1) according to any of claims 1 to 6, **characterized in that** no signals (17) are generated if the zoom level of the map display means (7) is displaying more than segments_max segments (11), where segments_max preferably is an integer number.

8. Information system (1) according to any of claims 1 to 7, **characterized in that** a geographical region may be defined as a group of segments (11) with certain segment-identifiers (13).

9. A computer-implemented method to obtain an exposition rating (29) of a certain geographical area including the steps of

    a. transferring and displaying of images of segments (11) with a certain segment-identifier (13) of a topographic map corresponding to a geographical area from a server (9) or a map-server to at least one client device (3) based on a request by the respective client device (3) to the server (9) requesting the display of a map (5) corresponding to this geographical area,
    b. capturing the display of a segment on the server (9) for each display of a segment (11) to create a segment-frequency signal (17) corresponding to the number of impressions of the segment (11),
    c. generating location data (25) comprising that segment-frequency signal (17) and the corresponding segment-identifier (13) on the server (9),
    d. storing the location data (25) defining the total impressions of the segment (11) on at least one of the client devices (3),
    e. calculating an exposition rating (29) for a particular geographical area corresponding to at least one segment-identifier (13) determined from the segment-frequency signals (17) taking into account the location data (25).

Overall Process Flow-Data Collection

Client

Start

User requesting a map

sending tiles to the client

Displaying the map

transfer of additional data, such as the location

Displaying additional information

End

Server

Processing the request

Capturing the tile-frequency signal

Storing the location data — 25

Calculating the exposition rating — 29

Fig. 1

EP 2 782 058 A1

EP 2 782 058 A1

| Server | | Client Device | |
|---|---|---|---|
| 23 — Signal processing means | | Map display means — 7 | |
| 27 — Storage means | | Information display means — 5 | |
| 37 — Rating means | | | |
| 15 — Signal triggering means | | | |
| 19 — Measuring means | | | |

Fig. 2

Fig. 3

Fig. 4

Fig. 5

Fig. 6

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/281689 A1 (ALTMAN SAMUEL H [US] ET AL) 6 December 2007 (2007-12-06) * the whole document * ----- | 1-9 | INV. G06Q30/02 G06Q10/00 |
| X | JP 2001 194172 A (HITACHI LTD; ZANAVY INFORMATICS KK) 19 July 2001 (2001-07-19) * the whole document * ----- | 1-9 | |

TECHNICAL FIELDS
SEARCHED      (IPC)

G06Q

The present search report has been drawn up for all claims

| Place of search | Date of completion of the search | Examiner |
|---|---|---|
| Munich | 13 September 2013 | Lopes Margarido, C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 13 16 0234

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2013

| Patent document cited in search report | | Publication date | Patent family member(s) | | Publication date |
|---|---|---|---|---|---|
| US 2007281689 | A1 | 06-12-2007 | EP 2033456 A2 | | 11-03-2009 |
| | | | US 2007281689 A1 | | 06-12-2007 |
| | | | US 2008132251 A1 | | 05-06-2008 |
| | | | US 2008132252 A1 | | 05-06-2008 |
| | | | US 2008133336 A1 | | 05-06-2008 |
| | | | US 2012172062 A1 | | 05-07-2012 |
| | | | US 2012220314 A1 | | 30-08-2012 |
| | | | WO 2007143106 A2 | | 13-12-2007 |
| JP 2001194172 | A | 19-07-2001 | JP 4323045 B2 | | 02-09-2009 |
| | | | JP 2001194172 A | | 19-07-2001 |

EPO FORM P0459

For more details about this annex : see Official Journal of the European Patent Office, No. 12/82